Europäisches Patentamt

European Patent Office

Office européen des brevets

(11) Veröffentlichungsnummer: **0 022 145**
**B1**

(12) **EUROPÄISCHE PATENTSCHRIFT**

(45) Veröffentlichungstag der Patentschrift:
**01.08.84**

(21) Anmeldenummer: **80101186.7**

(22) Anmeldetag: **08.03.80**

(51) Int. Cl.³: **B 24 B 5/42,** B 23 B 5/18

(54) Einrichtung an Werkzeugmaschinen.

(30) Priorität: **09.03.79 DE 2909227**

(43) Veröffentlichungstag der Anmeldung:
**14.01.81 Patentblatt 81/2**

(45) Bekanntmachung des Hinweises auf die Patenterteilung:
**01.08.84 Patentblatt 84/31**

(84) Benannte Vertragsstaaten:
**CH FR GB SE**

(56) Entgegenhaltungen:
**DE - B - 1 038 868**
**DE - C - 480 654**
**FR - A - 2 080 778**
**GB - A - 1 176 122**
**US - A - 2 014 768**
**US - A - 2 291 035**

(73) Patentinhaber: **Naxos-Union Schleifmittel und
Schleifmaschinenfabrik, Wächtersbacher Strasse 83,
D-6000 Frankfurt am Main (DE)**

(72) Erfinder: **Russ, Peter, Schumannstrasse 18,
D-4019 Monheim (DE)**
Erfinder: **Jansen, Heinz, Ing., Fliederweg 30,
D-5000 Köln 40 (DE)**

(74) Vertreter: **Keil, Rainer A., Dipl.-Phys. Dr. et al,
Patentanwälte KEIL & SCHAAFHAUSEN
Ammelburgstrasse 34, D-6000 Frankfurt am Main 1 (DE)**

## Beschreibung

Die Erfindung betrifft eine Einrichtung an Werkzeugmaschinen zum Schleifen oder Drehen gemäss dem Oberbegriff des Patentanspruchs 1. Werkzeugmaschinen zum Drehen oder Schleifen von zentrisch angeordneten Zapfen und auch zum Bearbeiten von grossen bzw. langen Werkstücken sind bekannt.

Handelt es sich hingegen um die Bearbeitung von exzentrisch zur Hauptlängsachse des Werkstückes verlaufende und dazu noch winkelversetzte Zapfen, wie es beispielsweise bei Kurbelwellen der Fall ist, so müssen unbedingt zusätzliche Einrichtungen vorhanden sein, die zumindest den zu bearbeitenden Zapfen aus einer kreisenden in eine rotierende Bahn versetzen. Hinzu kommt dann, dass für die Bearbeitung jedes winkelversetzten Zapfens das Werkstück neu, und zwar genau winkelgerecht eingespannt werden muss, was für eine serienmässige Herstellung untragbar ist.

Aus diesem Grunde wurden bereits Einrichtungen für Werkzeugmaschinen entwickelt, durch welche die jeweils exzentrisch angeordneten, zu bearbeitenden Zapfen oder Wellenteile in eine zentrische Stellung gebracht werden können (FR-A-2 080 778). Bei der bekannten Einrichtung ist auf der Antriebsspindel zum Halten eines Lagerteiles der Kurbelwelle ein Spannkörper angebracht. Der Spannkörper weist eine arretierbare und mittels einer Hubverstellvorrichtung radial bewegbare Verstellplatte zum Aufnehmen und Verdrehen der Kurbelwelle auf. Mittels eines zwischen Verstellantrieb und Verstellplatte zwischengeschalteten, ein- und auskuppelbarem Zahnrad kann die Radialverschiebung der Verstellplatte vorgenommen werden. Wird die Verstellplatte gedreht, so wird diese Drehung über Kupplungsteile auf die Kurbelwelle übertragen, indem diese schrittweise um den Lagerteil gedreht wird. Um Kurbelwellen mit unterschiedlichen Exzentrizitäten bearbeiten zu können, sind von Hand eine Reihe verschiedener Operationen, beginnend mit Lösen einer Einstellschraube und von Befestigungsschrauben, Anbringen von Abstandshaltern u. ä., erforderlich.

Auch sind bereits Einrichtungen bekannt, durch die man eine dem jeweiligen Winkelversatz der zu bearbeitenden Zapfen ohne eine Neueinspannung des Werkstückes einstellen kann (DE-AS 1 038 868). Eine bekannte Einrichtung dieser Art weist ein Spannfutter auf, welches an einem aussermittig einer Hauptspindel gelagerten Schwenkteil angeordnet ist. Das Spannfutter ist mit Hilfe einer Teilscheibe, welche durch ein Getriebe über eine koaxial zur Hauptspindel gelagerten Welle mit einem am Maschinengestell angebrachten Schaltantrieb verbunden ist, umschaltbar und verriegelbar. Dieser Hilfsantrieb besteht aus einer am Maschinengestell durch Hydraulik verschiebbare Zahnstange und einem damit kämmenden Zahnrad, welches in oder ausser Eingriff mit dem Getriebe einer aus der Hauptspindel herausragenden und aussermittig gelagerten Schwenkspindel gebracht werden kann. Die Drehbank weist insgesamt zwei sich koaxial gegenüberliegende Hauptspindeln mit Schwenkspindeln auf, welche zur Bearbeitung des Werkstückes im Gleichlauf betrieben werden. Die Mechanik zur Verschwenkung der Schwenkspindel unter Verwendung von Druckmitteln ist kompliziert, und es können mit demselben Teilring nur einige verschiedene Schwenkwinkel erzielt werden.

Diese bekannte Einrichtung wird nicht den an modernen, numerisch gesteuerten Werkzeugmaschinen gestellten Forderungen gerecht, insbesondere wenn die Werkzeugmaschinen zur hochpräzisen Serienfertigung eines bestimmten Werkstückes dienen. Hierfür müssen die Maschinen weitgehend automatisch arbeiten und den Bearbeitungsvorgang überwachen.

Hier setzt bereits die Erfindung ein, der die Aufgabe zugrunde liegt, eine Einrichtung für Werkzeugmaschinen der eingangs beschriebenen Art zu schaffen, durch welche die Bearbeitung von exzentrisch zur Hauptlängsachse des Werkstückes liegenden, zueinander winkelversetzten Zapfen in einfacher Weise ohne mehrmaliges Einspannen des Werkstückes möglich ist, dass sich wiederholende Umstellungen automatisch vorgenommen werden, und dass keine separaten Antriebe erforderlich sind. Für winkelversetzte Zapfen soll natürlich eine möglichst umfassende Teilungsmöglichkeit geschaffen werden.

Nach der Erfindung wird die Aufgabe dadurch gelöst, dass Mittel zum Durchführen von Teilungen ohne Abkupplung des Spannkopfes und damit des Werkstückes und zum Einstellen einer Teilung bei abgeschaltetem Antrieb am Teilkopf vorgesehen sind, dass am dem Teilkopf abgewandten Ende des Spindelstockes der Teilkopfantrieb vorgesehen ist, welcher automatisch arbeitende Verbindungsmittel sowie von Hand betätigbare Glieder zum Einleiten und Durchführen eines Teilvorganges im Teilkopf aufweist, und dass entsprechende Geber zum elektronischen Überwachen eines Teilvorganges, der richtigen Teilung und der Einleitung sowie der Beendigung eines Teilvorganges angebracht sind.

Zur Hubverstellung ist eine an der als Hohlspindel ausgebildeten Hauptantriebsspindel befestigte Planscheibe vorgesehen, deren freie Stirnfläche Planflächen oder Nuten aufweist, an denen oder in denen eine senkrecht zur Längsachse der Hohlspindel verschiebbare und in der gewünschten Versatzstellung durch Feststellmittel fixierbare Platte vorgesehen ist, die gleichzeitig zum eigentlichen Teilkopf gehört.

Was den Teilkopf selbst anbetrifft, so wird erfindungsgemäss vorgeschlagen, dass dieser im wesentlichen aus einem an der genannten Platte befestigten zylindrischen Gehäuse besteht, in dem an der dem Spannkopf zugewandten Seite ein den Spannkopf aufnehmender, mit einem Zahnradantrieb in Verbindung stehender Ringkörper drehbar, jedoch nicht axial verschiebbar, gelagert ist, dass zwischen dem Ringkörper und dem zylindrischen Gehäuse Festhaltemittel und Kupplungsmittel zur starren Verbindung der beiden Teile vorgesehen sind, dass die Kupplungsmittel derart ausgebildet sind, dass der Ringkörper in nahezu allen Winkelstellungen formschlüssig mit dem Gehäuse verbindbar ist, und dass eine Vorrichtung zum Entkuppeln der Kupplungsmittel und Freigeben des Ringkörpers für einen Teilvorgang vorgesehen ist. Die Kupplungsmittel sind als ringförmige Scheiben ausgebildet und an den einander gegenüberliegenden Stirnflächen mit Planverzahnungen versehen, wobei eine der beiden Scheiben fest mit dem zylindrischen Gehäuse verbunden und die zweite Scheibe axial verschiebbar gelagert, jedoch durch Federmittel mit ihrer Planverzahnung in die Planverzahnung der fest angeordneten Scheibe eingreift. Da von den Planverzahnungen die Genauigkeit der Teilvorgänge abhängig ist, müssen diese eine hohe Präzision aufweisen. Um möglichst viele Teilvorgänge ausführen zu können, weisen die Planverzahnungen vorzugsweise jeweils 120 Zähne auf.

Weiter wird erfindungsgemäss vorgeschlagen, dass der Ringkörper als Zahnkranz ausgebildet ist, und dass der mit dem Zahnkranz in Verbindung stehende Zahnradantrieb eine Relativdrehung des Zahnkranzes zum zylindrischen Gehäuse überträgt und aus einer mittig im zylindrischen Gehäuse gelagerten, an beiden Enden mit eingearbeiteten Stirnzahnrädern versehenen Welle besteht, dass das eine Stirnzahnrad über ein Zwischenrad in den Zahnkranz eingreift und das zweite Stirnzahnrad über ein Zwischenrad mit einem an einer Hohlwelle befestigten Zahnrad in formschlüssiger Verbindung steht. Die Hohlwelle ist dabei in der als Hauptantriebsspindel vorgesehenen Hohlspindel gelagert und bildet das Verbindungsglied zwischen dem Teilkopf und dem Teilkopfantrieb.

Die Vorrichtung zum Entkuppeln der Kupplungsmittel und damit zum Freigeben des Ringkörpers bzw. des Zahnkranzes besteht erfindungsgemäss aus einem im zylindrischen Gehäuse durch ein Gelenk verschwenkbaren Hebel, einen im zylindrischen Gehäuse verschiebbar gelagerten Bolzen und einer in der Hohlwelle angeordneten Druckstange, welche vorzugsweise durch einen hydraulischen Antrieb verschiebbar ist.

Der Teilkopfantrieb wird, wie bereits erwähnt, vom Antrieb der Werkzeugmaschine betrieben und weist im wesentlichen eine elektro-magnetische Kupplung zum automatischen Teilen im Teilkopf sowie eine mittels eines Schlüssels von Hand betätigbare Einrichtung zum Teilen bei abgeschalteter Maschine auf.

Weitere Einzelheiten der Erfindung können den Unteransprüchen und der nachfolgenden Beschreibung eines in den Zeichnungen dargestellten Ausführungsbeispieles entnommen werden. Es zeigen:

Fig. 1 den schematischen Aufbau einer Präzisionswerkzeugmaschine zum Schleifen von Kurbellagerzapfen mit der Einrichtung nach der Erfindung;

Fig. 2 einen Längsschnitt durch den erfindungsgemässen Teilkopf mit einer Hubverstellung;

Fig. 3 die Hubverstellung im Prinzip nach einem Schnitt III–III in Fig. 2, jedoch ohne alle übrigen Teile;

Fig. 4 eine Seitenansicht der zur Hubverstellung gehörenden Antriebsteile;

Fig. 5 eine Variante zu Fig. 4;

Fig. 6 einen Längsschnitt durch den Teilkopfantrieb für den Teilkopf nach Fig. 2 von oben gesehen.

In den Figuren sind nur die zum besseren Verständnis der Arbeitsweise bzw. der Zusammenhänge dienenden Teile mit Bezugszeichen versehen.

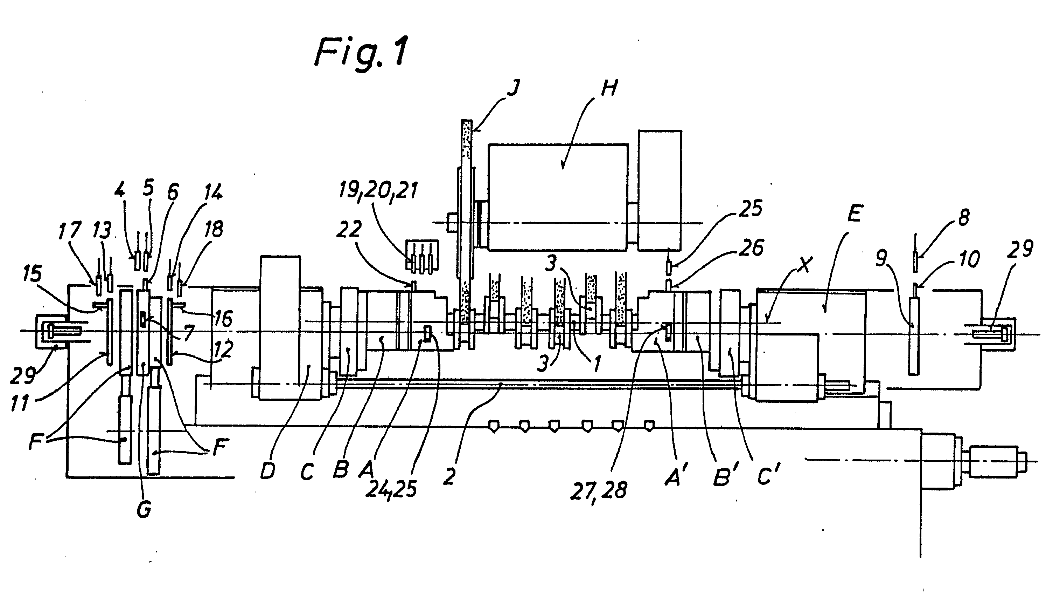

In Fig. 1 ist eine mehrhubige Kurbelwelle 1 in zwei Spannköpfen A, A' zur Bearbeitung der Kurbellagerzapfen fest eingespannt. Der spindelstockseitig vorgesehene Spannkopf A ist an einem Teilkopf B befestigt, der eine radiale Hubverstellung C aufweist und mit dem Spindelstock D in enger Verbindung steht. Auf der Reitseite steht der Spannkopf A' ebenfalls mit einem Teilkopf B' in Verbindung, der eine Hubverstellung C' aufweist, jedoch am Reitstock E befestigt ist. Der Spindelstock D ist durch eine Schaftwelle 2 synchron mit dem Reitstock E verbunden, so dass beide Einheiten gleichmässig angetrieben werden. An der Seite des Spindelstockes D ist schliesslich noch ein Teilkopfantrieb F vorgesehen, der unter anderem auch eine sogenannte «12-Uhr-Stellungseinrichtung» G aufweist. Über der Kurbelwelle 1 ist auch noch ein Werkzeug-Spindelstock H mit einer Schleifscheibe J zum Bearbeiten der einzelnen Kurbellagerzapfen 3 in axialer Richtung verschiebbar gelagert.

Damit die Kurbelwelle richtig in die Spannköpfe A, A' eingelegt werden kann, muss das gesamte System in der dargestellten Winkellage, in der sogenannten «12-Uhr-Stellung», stehen. Dies ermöglichen berührungslose Schalter 4, 5 in Verbindung mit an der «12-Uhr-Stellungseinrichtung» G angebrachten Nocken 6, 7.

Soll die Drehung der Kurbelwelle 1 abgeschaltet werden, so wird automatisch über eine nicht zur Erfindung gehörende Rampe die Drehzahl reduziert. Nach Erreichen einer bestimmten Drehzahl wird über den Nocken 7 und den Schalter 4 die Drehzahl bis auf einen Schleichgang verlängert. Sobald der Nocken 6 den Schalter 5 erreicht, wird winkelgenau abgeschaltet und eine nicht zur Erfindung gehörende Haltbremse fällt ein.

Damit die richtige Winkelstellung, die sogenannte «12-Uhr-Stellung» auch an der Seite des Reitstockes E tatsächlich erreicht ist, wird von einem ebenfalls berührungslosen Schalter 8 und einem auf einer zur Teilungsüberwachung vorgesehenen Scheibe 9 angeordneten Nocken überprüft. Erst wenn die Winkelstellung auch an der Seite des Reitstockes E stimmt, werden die weiteren Funktionen, die nicht zur Erfindung gehören, automatisch eingeleitet.

Nach dem ordnungsgemässen Einlegen und Festspannen der Kurbelwelle 1 können die in Schleifstellung stehenden Kurbellagerzapfen 3 durch die Schleifscheibe J fertig geschliffen werden. Sobald dies erfolgt ist und die Schleifscheibe J bzw. der Schleifspindelstock H, die Lünette und der Messtaster ihre hintere Ausgangsstellung erreicht haben, erfolgt auf elektronischem Wege das Signal «Teilen auf den nächsten Kurbellagerzapfen».

Über den später noch im einzelnen beschriebenen Teilkopfantrieb F und die Teilköpfe B, B' wird nun geteilt, und zwar während der Drehung der Kurbelwelle 1. Damit auch tatsächlich richtig geteilt wird, sind im Teilkopfantrieb F Zählscheiben 11, 12 vorgesehen, welche die Relativbewegung über berührungslose Schalter 13, 14 einer Spezial-Elektronik übermitteln, welche die Teilwinkel vorwählt. An den Zählscheiben 11, 12 angebrachte Referenznocken 15, 16 und weitere berührungslose Schalter 17, 18 dienen schliesslich zum Erkennen der relativen Winkellage zwischen einer später noch beschriebenen Hohlspindel und einer Hohlwelle durch die Elektronik, sobald der Strom eingeschaltet wird.

Nach Beendigung des Teilvorganges wird während der folgenden Umdrehung über einen der ebenfalls berührungslosen Schalter 19, 20, 21 und einen der am Spannkopf A vorgesehenen Nocken 22, 23, 24 sowie dem Schalter 5 und dem Nocken 6 im Teilkopfantrieb F elektronisch überprüft, ob richtig geteilt wurde. Da über die Kurbelwelle 1 der Spannkopf A' während des Teilvorganges mitgenommen wird, überprüft die Elektronik gleichzeitig mit der vorstehend erwähnten Überprüfung auf der Seite des Spindelstockes D auch auf der Seite des Reitstockes E über einen Schalter 25 und einen von drei am Spannkopf A' angebrachten Nocken 26, 27, 28 sowie dem Schalter 8 und dem Nocken 10, ob auch auf dieser Seite richtig geteilt wurde. Es könnte ja immerhin vorkommen, dass die Kurbelwelle während des Teilvorganges einmal durchrutscht. Nach Rückmeldung eines positiven Überprüfungsergebnisses werden automatisch die nächsten Funktionen eingeleitet.

Es sei hier ausdrücklich erwähnt, dass die vorstehend kurz beschriebene elektronische Steuerung nicht zur Erfindung gehört, sondern lediglich zum besseren Verständnis der Gesamtfunktion dienen soll.

Rein der Vollständigkeit halber werden noch zwei hydraulische Antriebe 29 erwähnt, deren Funktion später noch genau beschrieben ist.

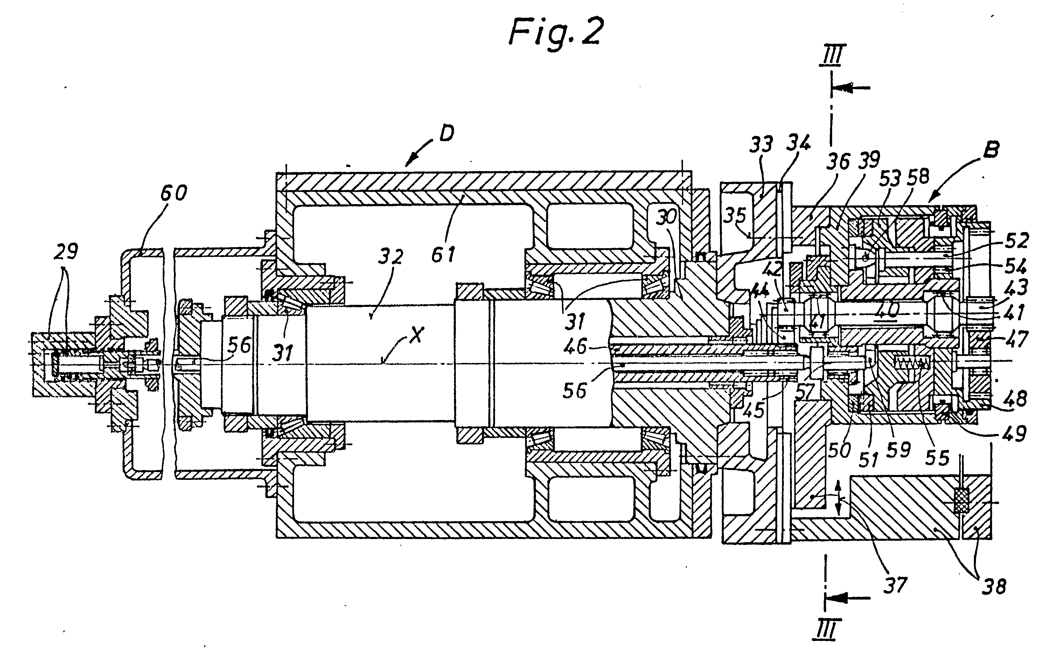

Gemäss Fig. 2 ist an einem Spindelkopf 30 einer in Präzisionslagern 31 im Spindelstockgehäuse 61 geführten, bereits früher erwähnten Hohlspindel 32, die als Hauptantriebsspindel dient, eine Planscheibe 33 befestigt, welche an ihrer freien Stirnfläche senkrecht zur Längsachse x der Hohlspindel 32 verlaufende Planflächen oder Nuten 34 aufweist. An diesen Planflächen oder in diesen Nuten 34 ist nach Lösen von Schrauben 35 eine Platte 36 in Richtung des Pfeiles 37 verschiebbar angeordnet, wodurch der Versatz des zu bearbeitenden Kurbellagerzapfens 3 (Fig. 1) zum Hauptlagerzapfen der Kurbelwelle einstellbar ist. Mit der Planscheibe 33 sind zum Massenausgleich auch noch Gegengewichte 38 fest verbunden.

An der als Schlitten ausgebildeten Platte 36 ist zentrisch ein zylindrisches Gehäuse 39 befestigt, in dem zentrisch eine Welle 40 in Lagern 41 angeordnet ist. Die beiden Enden der Welle 40 sind als Stirnzahnräder 42, 43 ausgebildet. Das Stirnzahnrad 42 greift in ein Zwischenrad 44 und dieses wiederum in ein Zahnrad 45 am Ende einer Hohlwelle 46 ein. Die Hohlwelle ist in der Hohlspindel 32 gelagert und gilt als Verbindungsglied zwischen dem Teilkopf B und dem Teilkopfantrieb F, der später noch beschrieben wird.

Das am anderen Ende der Welle 40 vorgesehene Stirnrad 43 greift ebenfalls in ein Zwischenrad 47 ein und dieses wiederum in einen innenverzahnten Zahnkranz 48. Der Zahnkranz 48 dient einerseits als Abtriebsglied des Teilkopfes B und anderseits als Basis zur Befestigung des Spannkopfes A. Er ist mittels eines kombinierten Radial- und Axiallagers 49 in Präzisionsausführung im zylindrischen Gehäuse 39 gelagert, welches derart ausgelegt ist, dass es alle auftretenden Kräfte aufnehmen kann.

Im zylindrischen Gehäuse 39 befinden sich ferner zwei Scheiben 50, 51, welche an den einander gegenüberliegenden Stirnflächen Planverzahnungen aufweisen, die ineinandergreifen und eine formschlüssige Verbindung bilden. Die Planverzahnungen sind mit hoher Präzision gefertigt und bilden die Grundlage für die Teilgenauigkeit des Teilkopfes B. Vorzugsweise werden die Planverzahnungen der Scheiben 50, 51 mit 120 Zähnen versehen, um Teilungen wie 2, 3, 4, 5, 6, 8, 10 und 12 vornehmen zu können, welche bei der Bearbeitung von Kurbelwellen die wohl häufigsten sind. Natürlich können auch zwanziger, dreissiger, vierziger und sechziger Teilungen vorgenommen werden. Nur für Sonderteilungen wie beispielsweise 7 und 9 müssen Spezialscheiben eingebaut werden.

Die Scheibe 50 ist im zylindrischen Gehäuse 39 befestigt und bildet die Basis für die Teilung. Die Scheibe 51 hingegen ist mittels mehrerer Bolzen 52, welche in einem Scheibenkörper 53 eingepresst sind und in Kugelführungsbüchsen 54, die im Körper des Zahnkranzes 48 eingepresst sind, mit Vorspannung geführt. Hierdurch ist es möglich, einerseits mittels der planverzahnten Scheiben 50, 51 den Zahnkranz 48 mit dem zylindrischen Gehäuse 39 in der gewünschten Teilung formschlüssig zu verbinden, anderseits aber auch den Zahnkranz 48 vom Gehäuse 39 zum Teilen zu trennen.

Zwischen dem Körper des Zahnkranzes 48 und dem Scheibenkörper 53 sind mehrere Schraubenfedern 55 vorgesehen, welche die Planverzahnung der Scheibe 51 grundsätzlich in die Planzahnung der Scheibe 50 drücken. In dieser Stellung erfolgt die Bearbeitung der Kurbellagerzapfen 3.

Soll geteilt werden, so wird über eine Druckstange 56, die in der durch die Hohlspindel 32 führenden Hohlwelle 46 gelagert ist, einen getrennt im zylindrischen Gehäuse 39 verschiebbar gelagerten Bolzen 57 und einen am Gehäuse 39 durch ein Gelenk 58 schwenkbar angebrachter Hebel 59, welcher zentrisch an dem Scheibenkörper 53 angreift, die Scheibe 51 gegen die Kraft der Schraubenfedern 55 von der Scheibe 50 abgehoben und dadurch die formschlüssige Verbindung gelöst. Nun kann durch den später noch beschriebenen Teilkopfantrieb F, die Hohlwelle 46, die Zahnräder 45, 44, 42, 43, 47 und den Zahnkranz 48, an dem der Spannkopf A befestigt ist, die gewünschte Teilung vorgenommen werden. Die Druckstange 56 wird im Beispiel durch den an einem nur zum Teil dargestellten Gehäuse 60 befestigten hydraulischen Antrieb 29 betätigt. Ist der Teilvorgang abgeschlossen, so wird der hydraulische Antrieb 29 abgeschaltet, das Medium, vorzugsweise Öl, entweicht, die Druckstange 56, der Bolzen 57 und der Scheibenkörper 53 werden durch die Kraft der Schraubenfedern 55 in ihre Ausgangsstellung gedrückt, in der die Scheibe 51 mit ihrer Planverzahnung in die der Scheibe 50 eingreift, so dass die formschlüssige Verbindung für die Bearbeitung der Kurbellagerzapfen 3 wieder hergestellt ist.

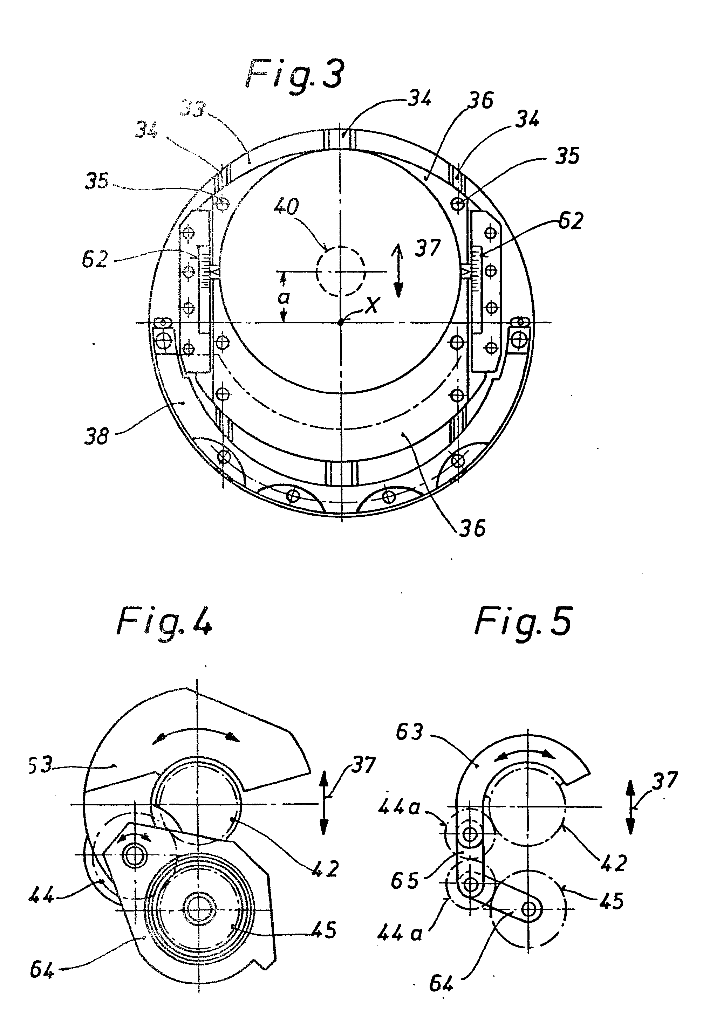

Aus Fig. 3 ist der Versatz A der Welle 40 zur Längsachse x der Hohlspindel 32 deutlicher zu erkennen. An den Planflächen oder in den Nuten 34 kann die Platte 36 nach Lösen der Schrauben 35 je nach dem Abstand der Kurbelwellenzapfen von den Kurbellagerzapfen 3 entsprechend in Richtung des Pfeiles 37 verschoben und danach durch die Schrauben 35 wieder fest fixiert werden. Anzeigevorrichtungen 62 erleichtern die Einstellung. Schliesslich sind auch noch die Gegengewichte 38 erkennbar.

Fig. 4 zeigt das in die Hohlwelle 46 eingearbeitete Zahnrad 45, das Zwischenrad 44 und das Stirnrad 42, welches gemäss Fig. 2 auf der Welle 40 befestigt ist, von der Stirnseite aus. Das Zwischenrad 44 ist in einem Flansch 63 gelagert, und das Zahnrad 45 wird durch eine Verbindungslasche 64 immer im gleichen Abstand mit dem Zwischenrad 44 gehalten. Wird also die Welle 40 (Fig. 2) gegenüber der Längsachse x durch die Platte 36 verstellt, so bleiben alle Zahnräder 45, 44 und 42 ständig miteinander in Eingriff. Bei einer derartigen Anordnung wird allerdings das Zahnrad 45 und damit auch die Hohlwelle 46 geringfügig verdreht. Diese Verdrehung muss kompensiert werden, indem die Schalter 17 und 13 (Fig. 1) mit ihrer Halterung der Verdrehung der Hohlwelle 46 nachgeführt und wieder festgeklemmt werden, damit beim Teilen kein Fehler auftritt.

Anders sieht die Angelegenheit bei einer Anordnung gemäss der Fig. 5 aus. Hier ist das Zahnrad 45 über zwei Zwischenräder 44, 44a mit dem Stirnrad 42 verbunden. In dem Flansch 63 ist wieder das eine Zwischenrad 44 gelagert, eine Lasche 65 erzwingt den dauernden Eingriff der Zwischenräder 44 und 44a miteinander, und die Verbindungslasche 64 besorgt das gleiche für das Zwischenrad 44a und das Zahnrad 45. Hier entsteht bei einer Hubveränderung am Zahnrad 45 keine Verdrehung, wodurch auch eine Korrektur an den Schaltern 17 und 13 (Fig. 1) entfällt.

Hieraus ist zu entnehmen, dass man die Ausführung nach Fig. 4 lediglich anwenden wird, wenn es eben aus Platzgründen nicht anders möglich ist.

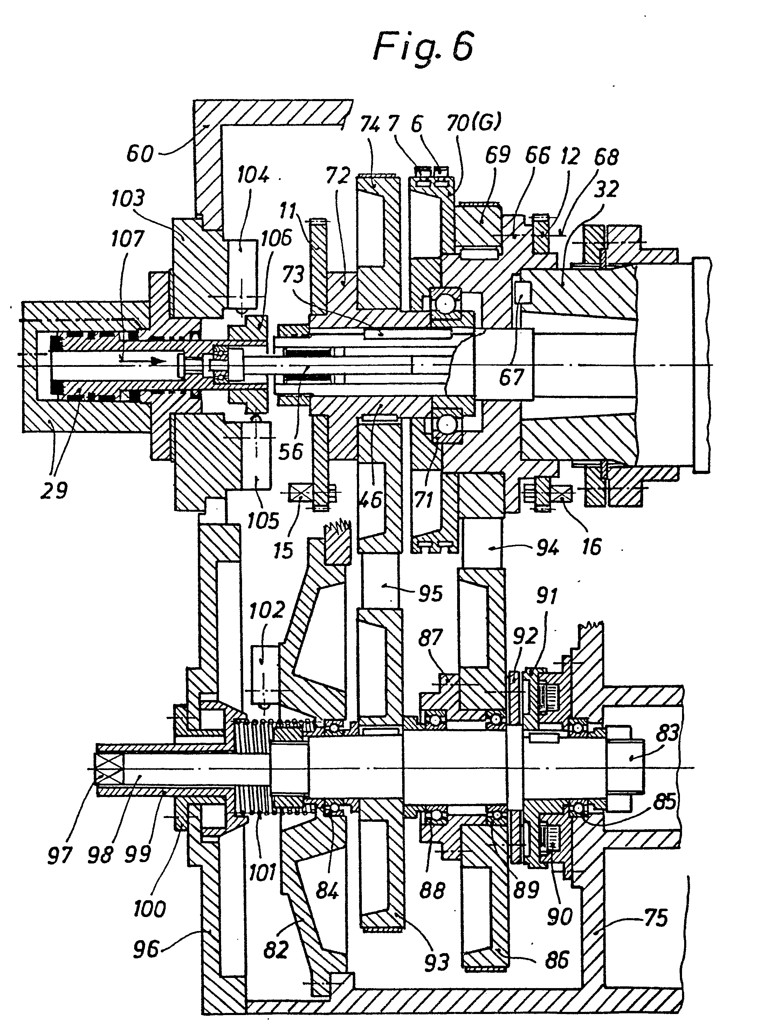

In Fig. 6 ist der Teilkopfantrieb F von oben gesehen im Schnitt dargestellt. Er ist teilweise im Gehäuse 60 (Fig. 2) untergebracht und ragt seitlich etwas vor. Aus den bisher beschriebenen Figuren, insbesondere aus Fig. 2, sind bereits die Hohlspindel 32, die Hohlwelle 46, die Druckstange 56, der hydraulische Antrieb 29 und das Gehäuse 60 bekannt.

Am freien Ende der Hohlspindel 32 ist ein Flansch 66 mittels nur angedeuteter Schrauben 68 befestigt und durch einen Mitnehmer 67 genau in seiner Position festgelegt. An dem Flansch 66 sind einerseits eine Zahnriemenscheibe 69, vorzugsweise mit achtzig Zähnen, und eine Nockenscheibe 70, auf deren Umfang Nocken 6, 7 sitzen, und anderseits eine einjustierbare, verzahnte Zählscheibe 12, vorzugsweise mit 120 Zähnen, befestigt. In radialer Richtung möglichst weit aussen ist seitlich an der Zählscheibe 12 ein einzelner Referenznocken 16 angebracht. In der Mitte des Flansches 66 ist die Hohlwelle 46 in einem Lager 71 radial und axial in beiden Richtungen gelagert.

Auf der Hohlwelle 46 ist ebenfalls ein Flansch 72 befestigt und durch eine Passfeder 73 gegen Drehen gesichert. Am Flansch 72 ist einerseits eine einjustierbare, verzahnte Zählscheibe 11, vorzugsweise ebenfalls mit 120 Zähnen, und einem einzelnen seitlichen Referenznocken 15 und anderseits wieder eine Zahnriemenscheibe 74, vorzugsweise mit 100 Zähnen, fest angeordnet.

Parallel zur Hohlspindel 32 und zur Hohlwelle 46 ist in einem Gehäuse 75 und in einem Deckel 82 eine Hilfswelle 83 in Lagern 84, 85 geführt. Eine zur Zahnriemenscheibe 69 fluchtende Zahnriemenscheibe 86, vorzugsweise mit 100 Zähnen, ist mit einem Flansch 87 fest verbunden, und beide Teile 86, 87 sind durch Lager 88, 89 auf der Hilfswelle 83 frei drehbar.

Zwischen der Gehäusewand 75 und der Zahnriemenscheibe 86 ist am Gehäuse 75 eine Erregerspule 90, auf der Hilfswelle 83 eine gegen Drehen gesicherte Mitnehmerscheibe 91 und an der Zahnriemenscheibe 86 eine Ankerschraube 92 einer elektro-magnetischen Kupplung befestigt.

Ferner ist auf der Hilfswelle 83 noch eine mit der Zahnriemenscheibe 74 fluchtende, gegen Verdrehen gesicherte Zahnriemenscheibe 93, vorzugsweise mit 80 Zähnen, befestigt. Die Zahnriemenscheiben 69 und 86 sind durch einen Zahnriemen 94 und die Zahnriemenscheiben 74 und 93 durch einen Zahnriemen 95 jeweils miteinander verbunden.

Das der Werkzeugmaschine bzw. dem Teilkopf B abgewandte freie Ende der Hilfswelle 83 ist durch einen Gehäusedeckel 96 des Gehäuses 75 nach aussen hindurchgeführt und vorzugsweise als Vierkant 97 ausgebildet. Über dem Wellenende 98 bzw. dem Vierkant 97 ist eine Hülse 99 verschiebbar angeordnet, die in einem am Gehäusedeckel 96 befestigten Flansch 100 geführt und durch eine sich einerseits am Deckel 82 abstützende Schraubenfeder 101 stets so nach aussen gedrückt wird, dass sie den Vierkant 97 überdeckt. Schliesslich ist am Deckel 82 noch ein Grenztaster 102 angebracht. Hier sei noch erwähnt, dass die Nockenscheibe 70 die in Fig. 1 kurz erwähnte «12-Uhr-Stellungseinrichtung» G und die Zahnriemenscheiben 69, 86, 74, 93 den angedeuteten Teilkopfantrieb F darstellen.

Die Hohlspindel 32, die Hohlwelle 46 und die übrigen dazugehörenden Teile werden von dem Gehäuse 60 umschlossen, an dem ein Deckel 103 und an diesem wiederum der hydraulische Antrieb 29 sowie zwei Grenztaster 104, 105 befestigt sind. Letztere arbeiten mit einem auf dem hydraulischen Antrieb 29 bzw. auf der Druckstange 56 befestigten Schaltglied 106 zusammen.

Während der Bearbeitung eines Kurbellagerzapfens 3 drehen sich die Hohlspindel 32 und die Hohlwelle 46 gemeinsam mit der gleichen Drehzahl, also synchron. Soll nun geteilt werden, so wird, wie bereits beschrieben, der hydraulische Antrieb 29 beaufschlagt und die Druckstange 56 in Richtung des Pfeiles 107 verschoben. Die wirkungslose Stellung des hydraulischen Antriebes 29 wird durch den Grenztaster 104 und seine Arbeitsstellung durch den Grenztaster 105 registriert und von der nicht zur Erfindung gehörenden elektronischen Steuerung weiter verarbeitet. Dadurch wird die bereits beschriebene formschlüssige Verbindung im Teilkopf B zwischen der Hohlspindel 32 und der Hohlwelle 46 aufgehoben. Gleichzeitig aber wird die Spule 90 der elektromagnetischen Kupplung erregt und dadurch die Zahnriemenscheibe 86 kraftschlüssig mit der Hilfswelle 83 verbunden.

Nun wird von der Zahnriemenscheibe 69 über den Zahnriemen 94, die Zahnriemenscheibe 86, die Hilfswelle 83, die Zahnriemenscheibe 93, den Zahnriemen 95 und die Zahnriemenscheibe 74 und damit die Hohlwelle 46 angetrieben. Da das Teilen während der Drehung der Hohlspindel 32 erfolgt, entsteht zwischen der Hohlspindel 32 und der Hohlwelle 46 zwangsläufig eine Relativbewegung. Die Hohlwelle 46 dreht sich nämlich wegen der zwischengeschalteten Untersetzung langsamer.

Ist der gewünschte Teilwinkel erreicht, so wird die elektro-magnetische Kupplung 90, 91 abgeschaltet und der hydraulische Antrieb 29 drucklos. Durch die im Teilkopf B vorgesehenen Schraubenfedern 55 gelangt auch die Druckstange 56 in ihre wirkungslose Lage, so dass die beschriebene formschlüssige Verbindung im Teilkopf B (50, 51) wieder hergestellt ist. Die Bearbeitung des nun in Position gebrachten Kurbellagerzapfens 3 kann beginnen.

Das Erreichen des gewünschten Teilwinkels und damit dieser auch tatsächlich eingehalten wird, übernehmen, wie bereits bei der Beschreibung der Fig. 1 erwähnt, die Zählscheiben 12, 11 mit ihren Referenznocken 16, 15 und eine speziell dafür entwickelte elektronische Schaltung.

Soll im anderen Falle bei stehender Hohlspindel 32, beispielsweise zum Einrichten, geteilt werden, so ist dies, wie nachfolgend beschrieben, ebenfalls möglich, und zwar von Hand:

Hierfür wird zunächst die Hülse 99 (Fig. 6) von Hand entgegen der Schraubenfeder 101 bis zum Anschlag nach innen gedrückt und um 90° gedreht. Dadurch bleibt sie in der eingerückten Stellung und gibt einerseits den Vierkant 97 frei und betätigt anderseits den Grenztaster 102. Durch Betätigen des Grenztasters 102 wird der Antriebsmotor für die Hohlspindel 32 gesperrt und der hydraulische Antrieb 29 beaufschlagt, so dass sich die Druckstange 56 in Richtung des Pfeiles 107 verschiebt und die formschlüssige Verbindung 50, 51 (Fig. 2) im Teilkopf B zwischen der Hohlspindel 32 und der Hohlwelle 46 aufhebt. Mit Hilfe einer auf den Vierkant 97 der Hilfswelle 83 aufgesteckten Kurbel kann nun über den Zahnriementrieb 93, 95, 74 die Hohlwelle 46 zum Teil verdreht werden.

Durch Zurückdrehen der Hülse 99 um 90° wird diese durch die Schraubenfeder 101 wieder in ihre Ausgangsposition verschoben, so dass der alte Zustand hergestellt ist.

Es bleibt noch zu erwähnen, dass für die Bearbeitung von Kurbellagerzapfen, insbesondere bei grösseren Kurbelwellen, zum Vermeiden von Ungenauigkeiten in jedem Falle zwei Spannköpfe A, A′ und zwei Teilköpfe B, B′ vorzusehen sind, während für die Betätigung der letzteren jedoch nur ein Teilkopfantrieb F erforderlich ist. Die Übertragung seiner Funktion erfolgt auf elektronischem Wege.

Schliesslich seien noch einige Vorteile der Erfindung angeführt, die voraussichtlich erst aus der beispielsweisen Beschreibung hervorgehen:

1. Durch die präzisions-planverzahnten Scheiben 50, 51 wird eine genaue Teilung erreicht.

2. Es ist eine genaue Anpassung des jeweils gewünschten Kurbelwellenhubes möglich.

3. Es ist ein automatischer Teilvorgang während der Drehung des Werkstückes möglich.

4. Das Werkstück kann während der Bearbeitung aller Zapfen fest eingespannt bleiben.

5. Besondere Antriebe sind nicht erforderlich, da der Antrieb der Werkzeugmaschine für alle Vorgänge ausreicht.

6. Es ist eine genaue Anpassung an das zu bearbeitende Werkstück möglich.

7. Für den Teilkopfantrieb ist ein einfaches Antriebssystem geschaffen, ein separater Antrieb erübrigt sich.

8. Ein Teilen kann automatisch oder von Hand erfolgen, wie z.B. zum Einrichten.

9. Die Erfindung ermöglicht Teilungen wie 2, 3, 4, 5, 6, 8, 10, 12, 20, 30, 40 und 60 frei vorzuwählen, ohne dass irgendwelche Teile ausgewechselt werden müssen.

## Patentansprüche

1. Einrichtung an Werkzeugmaschinen zum Schleifen oder Drehen von exzentrisch zur Hauptlängsachse eines Werkstückes (1) verlaufenden, zueinander winkelversetzten Zapfen, insbesondere von Kurbellagerzapfen an mehrhubigen Kurbelwellen, wobei die Werkzeugmaschine wenigstens einen Spindelstock (D), einen Reitstock (E) oder zwei Spindelstöcke sowie zwei Spannköpfe (A, A') aufweist und das oder die Werkzeuge durch einen Werkzeug-Spindelstock (D) am Werkstück (1) entlang verfahrbar sind, wobei wenigstens auf der Spindelstockseite zwischen dem Spannkopf (A) und dem Spindelstock (D) ein mit einer Hubverstellung (C) versehener Teilkopf (B) vorgesehen ist, welcher den radialen Versatz (a) des zu bearbeitenden Zapfens (3) gegenüber der Längsachse (x) des Werkstückes (1) ausgleicht und der als Antriebsübertragungselement ausgebildet ist und wobei ein Teilkopfantrieb (F) vorgesehen ist, der durch Kupplungsmittel (66, 69, 94, 86) vom Antrieb (32) der Werkzeugmaschine betrieben wird, dadurch gekennzeichnet, dass Mittel (50, 51) zum Durchführen von Teilungen ohne Abkupplung des Spannkopfes (A) und damit des Werkstückes und zum Einstellen einer Teilung bei abgeschaltetem Antrieb am Teilkopf (B) vorgesehen sind, dass am dem Teilkopf (B) abgewandten Ende des Spindelstockes (D) der Teilkopfantrieb (F) vorgesehen ist, welcher automatisch arbeitende Verbindungsmittel (90, 91) sowie von Hand betätigbare Glieder (97, 99) zum Einleiten und Durchführen eines Teilvorganges im Teilkopf (B) aufweist, und dass entsprechende Geber (11, 15, 12, 16, 104, 105, 102) zum elektronischen Überwachen eines Teilvorganges der richtigen Teilung und der Einleitung sowie der Beendigung eines Teilvorganges angebracht sind.

2. Einrichtung nach Anspruch 1, dadurch gekennzeichnet, dass zur Hubverstellung eine an der als Hohlspindel (32) ausgebildeten Hauptantriebsspindel befestigte Planscheibe (33) vorgesehen ist, deren freie Stirnfläche Planflächen oder Nuten (34) aufweist, dass an der Planfläche oder in den Nuten (34) eine senkrecht zur Längsachse (x) der Hohlspindel (32) verschiebbare und in der gewünschten Versatzstellung durch Feststellmittel (35) fixierbare Platte (36) vorgesehen ist, und dass die Platte (36) gleichzeitig zum eigentlichen Teilkopf (B) gehört.

3. Einrichtung nach den Ansprüchen 1 und 2, dadurch gekennzeichnet, dass zu beiden Seiten der Platte (36) an der Planscheibe (33) Anzeigevorrichtungen (62) für den jeweils eingestellten Versatz angebracht sind.

4. Einrichtung nach den Ansprüchen 1 bis 3, dadurch gekennzeichnet, dass der Teilkopf (B) im wesentlichen aus einem an der Platte (36) befestigten zylindrischen Gehäuse (39) besteht, in dem an der dem Spannkopf (A) zugewandten Seite ein den Spannkopf (A) aufnehmender, mit einem Zahnradantrieb (47, 43, 40, 42, 44, 45) in Verbindung stehender Ringkörper (48) drehbar, jedoch nicht axial verschiebbar, gelagert ist, dass zwischen dem Ringkörper (48) und dem zylindrischen Gehäuse (39) Festhaltemittel (52) und Kupplungsmittel (50, 51) zur starren Verbindung der beiden Teile (48, 39) vorgesehen sind, dass die Kupplungsmittel (50, 51) derart ausgebildet sind, dass der Ringkörper (48) in nahezu allen Winkelstellungen formschlüssig mit dem Gehäuse (39) verbindbar ist, und dass eine Vorrichtung (58, 59, 57) zum Entkuppeln der Kupplungsmittel (50, 51) und Freigeben des Ringkörpers (48) für einen Teilvorgang vorgesehen ist.

5. Einrichtung nach den Ansprüchen 1 und 4, dadurch gekennzeichnet, dass die Kupplungsmittel (50, 51) als ringförmige Scheiben ausgebildet sind und an den einander gegenüberliegenden Stirnflächen Planverzahnungen aufweisen, dass eine der beiden Scheiben (50) fest mit dem zylindrischen Gehäuse (39) verbunden und die zweite Scheibe (51) axial verschiebbar gelagert, jedoch durch Federmittel (55) mit ihrer Planverzahnung in die Planverzahnung der fest angeordneten Scheibe (50) eingreift.

6. Einrichtung nach den Ansprüchen 4 und 5, dadurch gekennzeichnet, dass die Planverzahnungen der Scheiben (50, 51) eine hohe Präzision aufweisen und vorzugsweise mit jeweils 120 Zähnen versehen sind.

7. Einrichtung nach den Ansprüchen 4 und 5, dadurch gekennzeichnet, dass die Scheiben (50, 51) für nicht übliche Teilungen auswechselbar angeordnet sind.

8. Einrichtung nach den Ansprüchen 1 und 4 bis 7, dadurch gekennzeichnet, dass die verschiebbar gelagerte Scheibe (51) in einem Scheibenkörper (53) befestigt ist, dass die Festhaltemittel (52) als in den Scheibenkörper (53) befestigte, in Ausnehmungen des Ringkörpers (48) eingreifende Bolzen ausgebildet sind, und dass der Scheibenkörper (53) durch Federmittel (55) die Planverzahnung der Scheibe (51) in die Planverzahnung der Scheibe (50) zur formschlüssigen Verbindung drückt.

9. Einrichtung nach den Ansprüchen 4 und 8, dadurch gekennzeichnet, dass die Federmittel (55) zwischen dem Scheibenkörper (53) und dem Ringkörper (48) bzw. einem Zwischenstück angeordnet sind.

10. Einrichtung nach den Ansprüchen 4 bis 9, dadurch gekennzeichnet, dass der Ringkörper (48) als mit einer Innenverzahnung versehener Zahnkranz ausgebildet ist und mit einem kombinierten, in beiden Richtungen wirkenden Axiallager sowie einem Radiallager im Lager (49) des zylindrischen Gehäuses (39) gelagert ist.

11. Einrichtung nach den Ansprüchen 4 und 10, dadurch gekennzeichnet, dass der mit dem Zahnkranz (48) in Verbindung stehende Zahnradantrieb (47, 43, 40, 42, 44, 45) eine Relativdrehung des Zahnkranzes (48) zum zylindrischen Gehäuse (39) überträgt und aus einer mittig im zylindrischen Gehäuse (39) gelagerten, an beiden Enden mit eingearbeiteten Stirnzahnrädern (42, 43) versehenen Welle (40) besteht, dass das eine Stirnzahnrad (43) über ein Zwischenrad (47) in den Zahnkranz (48) eingreift und das zweite Stirnzahnrad (42) über ein Zwischenrad (44) mit einem an einer Hohlwelle (46) befestigten Zahnrad (45) in formschlüssiger Verbindung steht.

12. Einrichtung nach den Ansprüchen 1, 4 und 11, dadurch gekennzeichnet, dass die Hohlwelle (46) in der als Hauptantriebsspindel vorgesehenen Hohlspindel (32) gelagert und als Verbindungsglied zwischen dem Teilkopf (B) und dem Teilkopfantrieb (F) ausgebildet ist.

13. Einrichtung nach den Ansprüchen 1, 2, 4 und 11, dadurch gekennzeichnet, dass das mit dem Zahnrad (45) in Eingriff stehende Zwischenrad (44) an einer um die Hohlwelle (46) schwenkbaren Lasche (64) gelagert ist und durch einen das Stirnzahnrad (42) bzw. die Welle (40) teilweise umgreifenden Flansch (63) in jeder Schwenklage mit dem Stirnzahnrad (42) in formschlüssiger Verbindung bleibt.

14. Einrichtung nach den Ansprüchen 1, 2, 4 und 11, dadurch gekennzeichnet, dass zwischen dem Zahnrad (45) und dem Stirnzahnrad (42) zwei Zwischenräder (44a, 44) angeordnet sind, dass das Zwischenrad (44a) an einer um das Zahnrad (45) schwenkbaren Lasche (64) gelagert ist, und dass die Zwischenräder (44a, 44) mit einem die Welle (40) teilweise umgreifenden Flansch (63) verbunden sind, wodurch die Räder (44a, 44 und 42) in jeder Schwenklage in formschlüssiger Verbindung bleiben.

15. Einrichtung nach den Ansprüchen 4, 8 und 12, dadurch gekennzeichnet, dass die Vorrichtung zum Entkuppeln der Kupplungsmittel (50, 51) und damit zum Freigeben des Ringkörpers (48) aus einem im zylindrischen Gehäuse (39) durch ein Gelenk (58) schwenkbaren Hebel (59), einen im zylindrischen Gehäuse (39) verschiebbar gelagerten Bolzen (57) und einer in der Hohlwelle (46) angeordneten Druckstange (56) besteht, und dass durch Verschieben der Druckstange (56) und des Bolzens (57) der Hebel (59) den Scheibenkörper (53) entgegen der Kraft der Federmittel (55) in eine Entkupplungsstellung verlegt.

16. Einrichtung nach Anspruch 15, dadurch gekennzeichnet, dass das Verschieben der Druckstange (59) vorzugsweise durch einen hydraulischen Antrieb (29) erfolgt.

17. Einrichtung nach den Ansprüchen 1, 4 und 12, dadurch gekennzeichnet, dass die Kupplungsmittel zum Betreiben des Teilkopfantriebes (F) aus einer fest mit der als Hauptantriebsspindel ausgebildeten Hohlspindel (32) verbundenen, auf der Hohlwelle (46) drehbar gelagerten Zahnriemenscheibe (69), einer auf einer Hilfswelle (83) drehbar gelagerten Zahnriemenscheibe (86) und einen die beiden Zahnriemenscheiben (69, 86) miteinander verbindenden Zahnriemen (94) besteht.

18. Einrichtung nach den Ansprüchen 1 und 17, dadurch gekennzeichnet, dass die Zahnriemenscheibe (69) vorzugsweise 80 Zähne und die Zahnriemenscheibe (86) vorzugsweise 100 Zähne aufweist.

19. Einrichtung nach den Ansprüchen 1 und 17, dadurch gekennzeichnet, dass zwischen dem Gehäuse (75) des Teilkopfantriebes (F) und der Zahnriemenscheibe (86) um die Hilfswelle (83) eine aus einer Erregerspule (90), einer Mitnehmerscheibe (91) und einer Ankerscheibe (92) bestehende elektro-magnetische Kupplung angeordnet ist, und dass durch Erregen dieser Kupplung (90, 91, 92) die Zahnriemenscheibe (86) für einen Teilvorgang kraftschlüssig mit der Hilfswelle (83) verbindbar ist.

20. Einrichtung nach den Ansprüchen 1 und 17 bis 19, dadurch gekennzeichnet, dass auf der Hilfswelle (86) eine Zahnriemenscheibe (93) befestigt ist, welche über einen Zahnriemen (95) mit einer mit der Hohlwelle (46) fest verbundenen Zahnriemenscheibe (74) zusammenarbeitet.

21. Einrichtung nach Anspruch 20, dadurch gekennzeichnet, dass die Zahnriemenscheibe (93) vorzugsweise 80 Zähne und die Zahnriemenscheibe (74) vorzugsweise 100 Zähne aufweist.

22. Einrichtung nach den Ansprüchen 1 und 17 bis 20, dadurch gekennzeichnet, dass zum automatischen Teilen im Teilkopf (B) die elektro-magnetische Kupplung (90, 91, 92) und der hydraulische Antrieb (29) durch eine elektronische Einrichtung gleichzeitig ein- und ausschaltbar sind.

23. Einrichtung nach den Ansprüchen 1 und 17 bis 20, dadurch gekennzeichnet, dass das Wellenende (98) der Hilfswelle (83) durch einen Gehäusedeckel (96) des Teilkopfgehäuses (75) nach aussen geführt ist und vorzugsweise einen Vierkant (97) aufweist, und dass um den Vierkant (97) eine im Gehäusedeckel (96) axial verschiebbar gelagerte, durch Federmittel (101) in ihrer Lage gehaltene Hülse (99) angeordnet ist.

24. Einrichtung nach Anspruch 23, dadurch gekennzeichnet, dass die Hülse (99) entgegen der Kraft der Federmittel (101) in Richtung zum Gehäuseinneren verschiebbar und durch Drehen um etwa 90° verriegelbar ist, und dass in der Verriegelungsstellung ein Grenztaster (102) betätigt wird, durch den das Abschalten des Antriebes der Werkzeugmaschine und das Einschalten des hydraulischen Antriebes (29) für einen Teilvorgang von Hand hergestellt wird.

25. Einrichtung nach Anspruch 1, dadurch gekennzeichnet, dass an der Werkzeugmaschine zwei Teilköpfe (B, B') und nur ein Teilkopfantrieb (F) vorgesehen sind.

**Claims**

1. An arrangement on machine tools for grinding and turning of pins extending eccentrically to the main longitudinal axis of a workpiece (1) and being angularly off-set with respect to one another, especially of crankpins on multi-throw crankshafts, with the machine tool comprising at least one spindle stock (D), one tailstock (E) or two spindle stocks and two clamping heads (A, A') and the tool(s) being displaceable by a tool spindle stock (D) along the workpiece (1) and with an indexing head (6) provided with a throw adjuster (C) being located at least on the spindle stock side between the clamping head (A) and the spindle stock (D), which indexing head offsets the radial displacement (a) of the pin (3) to be processed over the longitudinal axis (x) of the workpiece (1) and which is formed as a drive transmission element, with an indexing head drive (F) being provided that is actuated by coupling means (66, 69, 95, 86) of drive (32) of the machine tool, characterized in that means (50, 51) are provided for performing indexing operations with no decoupling of the clamping head (A) and, hence, of the workpiece and for setting an indexing operation with the drive turned off on indexing head (B), that provided on the end of the spindle stock (D) facing away from the indexing head (B) is the indexing head drive (F) having automatically operating connecting means (90, 91) and manually operable elements (97, 99) for initiating and performing an indexing operation in the indexing head (B), and that corresponding transmitters (11, 15, 12, 16, 104, 105, 102) are provided for electronically monitoring and indexing operation, the proper indexing and the initiation and completion of an indexing operation.

2. An arrangement according to claim 1, characterized in that for throw displacement a planar disk (33) is provided, secured to the main drive spindle formed as a hollow spindle (32), with the free front face of such planar disk comprising planar faces or grooves (34), that provided on the planar face or in the grooves (34) is a plate (36) perpendicularly displaceable relative to the longitudinal axis (x) of the hollow spindle (32) and adapted to be fixed in the desired position of displacement by fixation means (35), and that the plate (36) at the same time is part of the actual indexing head (B).

3. An arrangement according to claims 1 and 2, characterized in that indicator means (62) for the respectively set displacement are provided at both sides of the plate (36) on the planar disk (33).

4. An arrangement according to claims 1 to 3, characterized in that the indexing head (B) substantially consists of a cylindrical housing (39) secured to the plate (36) in which is rotatably but not axially displaceably located, on the side facing the clamping head (A), an annular member (48) receiving the clamping head (A) and being in communication with a gear drive (47, 43, 40, 42, 44, 45), that provided between the annular member (48) and the cylindrical housing (39) are retaining means (52) and coupling means (50, 51) for rigidly interconnecting the two parts (48, 39), that the coupling means (50, 51) are formed such that the annular member (48) in almost all angular positions is adapted to be connected in form-closed manner with the housing (39), and that a means (58, 55, 57) is provided for decoupling the coupling means (50, 51) and for releasing the annular member (48) for an indexing operation.

5. An arrangement according to claims 1 and 4, characterized in that the coupling means (50, 51) are formed as annular discs and on the front faces thereof disposed opposite one another include planar toothings, that one of the two discs (50) is rigidly connected to the cylindrical housing (39) and the second disc (51) is diplaceably disposed while engaging by spring means (55) with the planar toothing thereof, the planar toothing of the rigidly disposed disc (50).

6. An arrangement according to claims 4 and 5, characterized in that the planar toothings of the discs (50, 51) are of a high precision and, preferably, are respectively provided with 120 teeth each.

7. An arrangement according to claims 4 and 5, characterized in that the discs (50, 51) are exchangeably disposed for unusual indexings.

8. An arrangement according to claims 1 and 4 to 7, characterized in that the displaceably disposed disc (51) is secured to a disc member (53), that the retaining means (52) are formed as pins secured to the disc member (53) and engaging recesses of the annular member (48), and that the disc member (53) by spring means (55) urges the planar toothing of the disc (51) into the planar toothing of the disc (50) for form-locked connection.

9. An arrangement according to claims 4 and 8, characterized in that the spring means (55) are disposed between the disc member (53) and the annular member (48) and an intermediate element, respectively.

10. An arrangement according to claims 4 to 9, characterized in that the annular member (48) is formed as a ring gear provided with an internal toothing, and with a combined, two-way axial bearing and a radial bearing is disposed in bearing (49) of the cylindrical housing (39).

11. An arrangement according to any of claims 4 and 10, characterized in that the gear drive (47, 43, 40, 42, 44, 45) cooperating with the ring gear (48) transmits a relative rotation of the ring gear (48) to the cylindrical housing (39) and comprises a shaft (40) centrally disposed in the cylindrical housing (39) and provided on both ends with recessed front gears (42, 43), that one of said front gears (43) via an intermediate gear (47) engages the ring gear (48) and said second front gear (42) via an intermediate gear (44) meshes with a gear (45) secured to a hollow shaft (46).

12. An arrangement according to claims 1, 4 and 11, characterized in that the hollow shaft (46) is disposed in the hollow spindle (32) provided as the main drive spindle and is formed as a connecting link between the indexing head (B) and the indexing head drive (F).

13. An arrangement according to claims 1, 2, 4 and 11, characterized in that the intermediate gear (44) meshing with the gear (45) is disposed on a strap (64) pivotable about the hollow shaft (46), and through a flange (63) partly embracing the front gear (42) and the shaft (40), respectively, in any pivot position, remains in form-locking engagement with the front gear (42).

14. An arrangement according to claims 1, 2, 4 and 11, characterized in that provided between the gear (45) and the front gear (42) are two gears (44a, 44), that the intermediate gear (44a) is disposed on a strap (64) pivotable about the gear (45), and that the intermediate gears (44a, 44) are connected to a flange (63) partly embracing the shaft (40) causing gears (44a, 44 and 42) to remain in form-locked connection in any pivot position.

15. An arrangement according to claims 4, 8 and 12, characterized in that the means for decoupling the coupling means (50, 51) and, hence, for relasing the annular member (48) is comprised of a lever (59) pivotable in the cylindrical housing (39) through a hinge (58), a pin (57) displaceably disposed in cylindrical housing (39) and a pusher rod (56) disposed in the hollow shaft (46), and that, by displacement of the pusher rod (56) and the pin (57), the lever (59) displaces the disc member (53), against the force of the spring means (55) into a decoupling position.

16. An arrangement according to claim 15, characterized in that the displacement of the pusher rod (55), preferably, is performed by a hydraulic drive (25).

17. An arrangement according to claims 1, 4 and 12, characterized in that the coupling means for operating the indexing head drive (F) is comprised of a toothed belt pulley (65) firmly connected to the hollow spindle (32) formed as the main drive spindle and rotatably disposed on the hollow shaft (46), a toothed belt pulley (86) rotatably disposed on an auxiliary shaft (83) and a toothed belt (94) interconnecting the two toothed belt pulleys (69, 86).

18. An arrangement according to claims 1 and 17, characterized in that the toothed belt pulley (69) preferably, includes eighty teeth while the toothed belt pulley (86), preferably includes one hundred teeth.

19. An arrangement according to claims 1 and 17, characterized in that an electromagnetic coupling composed of an exciting coil (90), a driving plate (91) and an anchor plate (92) is provided between the housing (75) of the indexing head drive (F) and the toothed belt pulley (86) about the auxiliary shaft (83) and that by energizing the said coupling (90, 91, 92), the toothed belt pulley (86), for an indexing operation, can be connected in form-locking manner to the auxiliary shaft (83).

20. An arrangement according to claims 1 and 17 to 19, characterized in that a toothed belt pulley (93) is secured to the auxiliary shaft (86) which, via a toothed belt cooperates with a toothed belt pulley (74) rigidly connected to the hollow shaft (46).

21. An arrangement according to claim 20, characterized in that the toothed belt pulley (93), preferably, includes eighty teeth, while the toothed belt pulley (74), preferably, has one hundred teeth.

22. An arrangement according to claim 20, characterized in that for automatically indexing in the indexing head (B), the electromagnetic coupling (90, 91, 92) and the hydraulic drive (29) can be turned on and off at same time by way of an electronic means.

23. An arrangement according to claims 1 and 17 to 20, characterized in that the shaft end (96) of the auxiliary shaft (83), by a housing cover (96) of the indexing head housing (75) is outwardly guided and, preferably, includes a square (97), and that a sleeve (99) axially displaceable in housing cover (96) and held in position by spring means (101) is disposed about the square (97).

24. An arrangement according to claim 23, characterized in that the sleeve (99) against the force of the spring means (101) is displaceable toward the housing interior and by rotation by about 90° is adapted to be locked, and that in the locking position, a limit sensor (102) is operated through which turning off the drive of the machine tool and turning on the hydraulic drive (25) for an indexing operation is performed manually.

25. An arrangement according to claim 1, characterized in that the machine tool comprises two indexing heads (B, B') and only one indexing head drive (F).

**Revendications**

1. Dispositif pour machines-outils pour rectifier ou tourner de tourillons passant excentriquement à l'axe principale d'une pièce à usiner (1) et angulairement «off-set» relative l'un à l'autre, spécialement de tourillons de palie manivelle sur des arbres-manivelle de plusieurs coups, la machine-outils comportant au moins une poupée porte-broche (D), une poupée mobile (E) ou deux poupées porte-broches et deux têtes à serrage (A, A'), le ou les machine(s) outil(s) étant déplaçable selon la machine-outil par une poupée porte-broche (D) de machine-outil, et au moins un appareille diviseur (B) ayant un mécanisme (C) de réglage de coup étant prévue sur le côté de la poupée porte-broche (D) entre la tête de serrage (A) et la poupée porte-broche (D), le mécanisme de réglage alignant le déplacement radial (a) du tourillon (3) à usiner vis-à-vis de l'axe longitudinal (x) de la pièce à usiner et êtant formé comme élément de transmission de commande, et une commande d'appareil diviseur (F) étant prévu actionné par des moyens d'accouplement (66, 69, 94, 86) de la commande (32) de la machine-outil, caractérisé par le fait que des moyens (50, 51) pour accomplir des divisions sans deplacer la tête de serrage (A) et ainsi la pièce à usiner et pour ajuster une division avec la commande débrayée sont prévus sur l'appareil diviseur (B), que la commande (F) de mécanisme diviseur est prévue à l'extrémité de la poupée porte-broche (D) détournée du mécanisme diviseur (B) comportant des moyens de liaison (90, 91) travaillant automatiquement, et des éléments (97, 99) à commande manuelle pour commencer et accomplir une opération division en appareil diviseur (B), et que des transmitteurs (11, 15, 12, 16, 104, 105, 102) pour la surveillance électronique d'une opération division, de la division propre et du commencement et accomplissement d'un opération division sont prévus.

2. L'ensemble selon la revendication 1, caractérisé par un plateau (33) fixé à la broche principale de commande formée comme broche creuse (32), le front de laquelle comporte des surfaces planes ou des rainures (34), par une disque (36) fixable par des moyens de blocage (35) dans la position de deplacement désirée et déplaçable perpendiculaire sur l'axe longitudinale (x) de la broche creuse (32) prévue sur les surfaces planes ou les rainures (34), et caractérisé par le fait que la disque (36) en même temps appartient à l'appareil de division (B) propre.

3. L'ensemble selon les revendications 1 et 2, caractérisé par des dispositifs indicateurs (62) prévus au deux côtés de la disque (36) du plateau (33) pour le déplacement respectivement ajusté.

4. L'ensemble selon les revendications 1 à 3, caractérisé par le fait que l'appareil diviseur (B) essentiellement est composé par un boîtier (39) cylindrique fixé à la disque (36) dans lequel est disposé dans une manière pivotante mais non déplaçable dans la direction axiale, sur le côté tourné à l'appareil diviseur (A) un élément annulaire (48) recueillant l'appareil diviseur (A) et engageant une commande par engrenages (47, 43, 40, 42, 44, 45), que des moyens de fixation (52) et des moyens d'accouplement (50, 51) sont prévus entre l'élément annulaire (48) et le boîtier (39) pour l'assemblage rigide des deux parties (48, 39), que des moyens d'accouplement (50, 51) sont formés de sorte que l'élément annulaire (48) soit reliable dans une manière commandée mécaniquement au boîtier dans presque toutes les positions angulaires, et qu'un mécanisme (58, 59, 57) pour découpler les moyens d'accouplement (50, 51) et pour relâcher l'élément annulaire (48) pour une opération division est prévu.

5. L'ensemble selon les revendications 1 et 4, caractérisé par le fait que les moyens d'accouplement (50, 51) sont formés comme des disques annulaires et comportent des dentures planes aux fronts opposants, que l'une des deux disques (50) est reliée rigidement au boîtier cylindrique (39) tandis que la disque secondaire (51) est déplaçable dans la direction axiale mais engrenée par l'intermédiaire des ressorts (55) avec ses dentures planes dans les dentures planes de la disque disposée rigidement.

6. L'ensemble selon les revendications 4 et 5, caractérisé par le fait que les dentures planes des disques (50, 51) sont d'une précision haute et, de préférence, sont prévues respectivement avec 120 dents.

7. L'ensemble selon les revendications 4 et 5, caractérisé par le fait que les disques (50, 51) sont disposées dans une manière échangeable pour des divisions non d'usage.

8. L'ensemble selon les revendications 1 et 4 à 7, caractérisé par le fait que la disque (51) disposée dans une manière déplaçable est fixée dans un élément (53) de disque, que les moyens de fixation (52) sont formés comme des chevilles fixées dans l'élément (53) et engrenant dans des rainures de l'élément annulaire (48) et que l'élément (53) par l'intermédiaire des ressorts (55) presse la denture plane de la disque (51) dans la denture plane de la disque (50) aux fins d'un assemblage commandé mécaniquement.

9. L'ensemble selon les revendications 4 et 8, caractérisé par le fait que les ressorts (55) sont disposés entre l'élément (53) et l'élément annulaire (48) respectivement une pièce intermédiaire.

10. L'ensemble selon les revendications 4 à 9, caractérisé par le fait que l'élément annulaire (48) est formé comme une couronne à denture prévue avec une denture intérieure et est disposé dans au palier (49) du boîtier cylindrique (39) avec un palier de butée combiné et marchant à deux directions et avec un palier radial.

11. L'ensemble selon les revendications 4 et 10, caractérisé par le fait que la commande par engrenages (47, 43, 40, 42, 44, 45) en communication avec la couronne à denture (48) transmet un mouvement relative de la couronne à denture (48) au boîtier (39) cylindrique et est composée d'un arbre (40) disposé centralement dans le boîtier (39) cylindrique et est prévu à deux côtés avec des roues dentées (42, 43) enfoncées, que l'une des roues dentées (43) par d'une roue intermédiaire (47) s'engrène dans la couronne à denture (48) et la deuxième roue dentée (42) par une roue intermédiaire (44) est en communication commandée mécaniquement avec une roue dentée (45) fixée à un arbre creux (46).

12. L'ensemble selon les revendications 1, 4 et 11, caractérisé par le fait que l'arbre creux (46) est disposé dans la broche creuse (32) formée comme broche principal de commande et est formé comme raccord entre l'appareil diviseur (B) et commande de l'appareil diviseur (F).

13. L'ensemble selon les revendications 1, 2, 4 et 11, caractérisé par le fait que la roue intermédiaire (44) s'engrenant avec la roue dentée (45) est disposée sur une jumelle (64) pivotante autour de l'arbre creux (46) et par l'intermédiaire d'un collet (63) partiellement entourant la roue dentée (42) respectivement l'arbre (40) dans chaque position pivotante reste engrené avec la roue dentée (42).

14. L'ensemble selon les revendications 1, 2, 4 et 11, caractérisé par le fait que deux roues intermédiaires (44a, 44) sont disposées entre la roue dentée (45) et la roue dentée (42), que la roue (44a) est disposée sur une jumelle (4) pivotante autour la roue dentée (45), et que les roues intermédiaires (44a, 44) sont en communication avec un collet (63) partiellement entourant l'arbre (40) ainsi que les roues (44a, 44 et 42) dans chaque position pivotante restent engrenées.

15. L'ensemble selon les revendications 4, 8 et 12, caractérisé par le fait que le mécanisme pour découpler les moyens d'accouplement (50, 51) et ainsi pour relâcher l'élément annulaire (48) est composé d'un levier (59) pivoté par un joint (58) dans le boîtier (39) cylindrique, une cheville (57) déplaçable dans le boîtier (39) cylindrique et un tronçon à compression (56) disposé dans l'arbre creux (46) et que le levier (59) deplaçant le tronçon à compression (56) et la cheville (57) pose l'élément (53) de disque contre la force des ressorts (55) dans une position découplée.

16. L'ensemble selon la revendication 15, caractérisé par le fait que le déplacement du tronçon à compression (59), de préférence, est accomplit par l'intermédiaire d'une commande (29) hydraulique.

17. L'ensemble selon les revendications 1, 4 et 12, caractérisé par le fait que les moyens d'accouplement pour actionner la commande de l'appareil diviseur (F) sont composés d'une poulie dentée (69) rotativement disposée sur l'arbre creux (46) et rigidement reliée avec la broche creuse (32) formée comme broche de commande principale, d'une poulie dentée (86) rotativement disposée sur un arbre auxiliaire (83) et d'une courroie dentée (94), reliant les deux poulies (69, 86).

18. L'ensemble selon les revendications 1 et 17, caractérisé par le fait que la poulie (69), de préférence, comporte quatre-vingt dents et la poulie (86), de préférence, comporte cent dents.

19. L'ensemble selon les revendications 1 et 17, caractérisé par le fait qu'un dispositif d'accouplement électromagnétique composé d'une bobine excitatrice (90), d'une disque entraineur (91) et d'une disque d'arcrage (92) est disposé entre le boîtier (75) de la commande de l'appareil diviseur (F) et la poulie de courroie dentée (86) autour de l'arbre auxiliaire (83), et que la poulie (86) pour une opération division est reliable à l'arbre auxiliaire (83) dans une manière commandé par l'excitation du dispositif d'accouplement (90, 91, 92).

20. L'ensemble selon les revendications 1 et 17 à 19, caractérisé par le fait qu'une poulie de courroie dentée (93) est fixée sur l'arbre auxiliaire (86), coopérant par l'intermédiaire d'une courroie dentée (95) avec une poulie de courroie dentée (74) reliée rigidement à l'arbre creux (46).

21. L'ensemble selon la revendication 20, caractérisé par le fait que la poulie de courroie dentée (93), de préférence, comporte quatre-vingt dents et la poulie de courroie dentée (74), de préférence, comporte cent dents.

22. L'ensemble selon les revendications 1 et 17 à 20, caractérisé par le fait que pour la division automatique dans l'appareil diviseur (B) le dispositif d'accouplement électromagnétique (90, 91, 92) et la commande (29) hydraulique, en même temps, peuvent être mis dans et hors de circuit par l'intermédiaire d'un mécanisme électronique.

23. L'ensemble selon les revendications 1 et 17 à 20, caractérisé par le fait que le bout d'arbre (98) de l'arbre auxiliaire (83) par un couvercle (96) du boîtier (75) de l'appareil diviseur est conduit extérieurement et, de préférence, comporte un carré (97), et qu'un manchon (99) axialement déplaçable dans le couvercle de boîtier (96) et mis en place par des ressorts (101) est disposé autour du carré (97).

24. L'ensemble selon la revendication 23, caractérisé par le fait que le manchon (99), contre la force des ressorts (101) est déplaçable vers l'intérieur du boîtier et blocable en tournant par 90° environ, et qu'un palpeur limite (102) est actionné dans la position de blocage par lequel la commande de la machine-outil est mis hors circuit et la commande (29) hydraulique pour une opération division est mis dans circuit manuellement.

25. L'ensemble selon la revendication 1, caractérisé par le fait que la machine-outil comporte deux appareils diviseurs (B, B') et seulement une commande de l'appareil diviseur.

Fig.1

Fig. 2

# Fig.3

# Fig.4

# Fig.5

# Fig. 6